# EUROPEAN PATENT APPLICATION

(11) **EP 4 625 070 A1**
(43) Date of publication of application: **01.10.2025**
(21) Application number: 24166218.8
(22) Date of filing: 26.03.2024
(51) Int. Cl.: G05B 19/042, G05B 19/418, H04L 12/54, H04L 41/0803

(54) **DYNAMICALLY RECONFIGURABLE FIELDBUS COMMUNICATIONS INTERFACE**

(71) Applicant: ABB SCHWEIZ AG, 5400 Baden (CH)
(72) Inventor: KEUL, Thomas, 63579 Freigericht (DE); BEBERNIK, Arthur, 31675 Bueckeburg (DE); HONG, Tina-TingTing, Shangcheng District, Hangzhou, 310000 (CN); SHI, Huan, Shangcheng District, Hangzhou, 310000 (CN); POOK, Stefan, 32423 Minden (DE)
(74) Representative: Maiwald GmbH

(57) **Abstract**

There is provided a dynamically reconfigurable fieldbus communications interface comprising: programmable logic which comprises a static area and at least one dynamic area; and control circuitry configured to program the at least one dynamic area using one of a plurality of interchangeable fieldbus stack hardware configurations, each conforming to a respective fieldbus protocol type.

## Description

### FIELD OF THE INVENTION

The invention relates to a dynamically reconfigurable fieldbus communications interface and to a method for dynamically reconfiguring the fieldbus communications interface.

### BACKGROUND

In the field of industrial automation, process control systems typically include a controller and a fieldbus communications interface (FCI). The controller connects with at least one network device such as a remote I/O module via a fieldbus network, while the FCI handles the fieldbus protocols. When the network device is changed to one using a different fieldbus protocol, the FCI typically needs to be replaced.

### SUMMARY

To better address one or more of these concerns, there is provided, in a first aspect of the invention, a dynamically reconfigurable fieldbus communications interface, as defined by the appended claims.

The interfaces and methods using dynamic reconfiguration as described herein serve to enable seamless exchange of fieldbuses in the process control system, reducing or eliminating the need for system downtime or manual intervention. Protocol flexibility is enhanced: the process control system is able to support multiple fieldbus protocols by dynamically exchanging configurations in the FPGA. Performance is enhanced: by exchanging fieldbuses based on requirements, the process control system achieves improved compatibility and adaptability. Disruption is minimized: the reconfiguration process facilitates uninterrupted communication between the process control system and subsystems. Bitstream security may be provided: partial bitstreams can be encrypted, for example with asymmetric cryptography, a secure method to protect FPGA configuration files. It will be appreciated, however, that other encryption techniques may be employed.

According to a second aspect, there is provided a method for dynamically reconfiguring the fieldbus communications interface as defined by the appended claims. The method may further comprise the step of utilizing the interface to communicate with at least one field device for the purpose of controlling an industrial automation system to carry out a production process. The method of the first aspect may be computer implemented. Optional features of the first aspect may form part of any further aspect, mutatis mutandis.

According to a third aspect, there is provided a network device for an industrial automation system, the network device comprising the dynamically reconfigurable fieldbus communications interface according to the first aspect, or being configured to perform the method for dynamically reconfiguring the fieldbus communications interface according to the second aspect. The network device may be any device which can be connected to a network, especially to a fieldbus network, such as a network switch, a controller, a remote I/O, a field device, or an engineering tool, for example.

According to a fourth aspect, there is provided a process control system comprising the network device of the third aspect.

According to a fifth aspect, there is provided an industrial automation system comprising the network device of the third aspect and/or the process control system of the fourth aspect.

According to a sixth aspect, there is provided a computer program (product) comprising instructions which, when executed by a computing system, enable or cause the computing system to perform the method of the second aspect.

According to a seventh aspect, there is provided a computer-readable (storage) medium comprising instructions which, when executed by a computing system, enable or cause the computing system to perform the method of the second aspect. The computer-readable medium may be transitory or non-transitory, volatile or non-volatile.

Programming of the at least one dynamic area, while the static area remains unaltered, may be referred to as partial reconfiguration. Partial reconfiguration carried out in this way permits the use of a hardware configuration which is smaller than that which would otherwise be necessary if the fieldbus communications interface were to be entirely reconfigured for implementing the required protocol type, thereby expediting the reconfiguration. Stated differently, adapting the dynamically reconfigurable fieldbus communications interface according to changing requirements requires only a partial reconfiguration and not a full reconfiguration of the interface.

The static area of the flexible fieldbus communications interface, which may be referred to as a static portion, remains unaltered during the partial reconfiguration. The static area may be (pre-)programmed to carry out tasks which are common to fieldbus instances conforming to different fieldbus protocol types. These protocol-agnostic tasks may comprise one or more of: a diagnostics task; a communications interface task; a support task for supporting the portion which is partially reconfigured; a general administration task.

By "static" is meant that the area may not be reconfigured or adapted during runtime. The static area may be programmed during a boot up process, for example while the flexible fieldbus communications interface is in a reset state. The method of the second aspect may further comprise the step of programming the static area of the dynamically reconfigurable fieldbus communications interface.

By "dynamic" is meant that the area may be reconfigured during runtime. Stated differently, that portion of the fieldbus communications interface which is reconfigured during partial reconfiguration may be referred to as a dynamic area, or alternatively as a reconfigurable area. A plurality of dynamic areas may be programmed to provide services which are independent of each other and independent of the static area. That is, partial reconfiguration of the flexible fieldbus communications interface performed in relation to the at least one dynamic area does not impact the function of the static area or of any other dynamic area.

In this way, the interface is able to support multiple heterogeneous fieldbus protocol types. The fieldbus stack hardware configurations may be stored in a library comprising a plurality of such configurations conforming to different fieldbus protocol types.

Fieldbus connectivity requirements which are used as the basis for reconfiguring the interfaces described herein may be obtained for example from an engineering server, for example as part of a required interface configuration. The required interface configuration may also identify the dynamic area which is to be reconfigured.

The term "portion" as used herein may be replaced by "area" or "region", as appropriate.

The "backplane" as described herein may otherwise be known as a mounting termination unit (MTU).

The "universal expansion module" as described herein may otherwise be known as an adapter.

By "industrial automation system" is meant a plant comprising one or more pipelines, production lines, and/or assembly lines for transforming one or more educts into a product and/or for assembling one or more components into a final product.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIG. 1 schematically illustrates part of a process control system in which dynamically reconfigurable fieldbus communications interfaces according to the present disclosure may be implemented;
FIG. 2 schematically illustrates a first static fieldbus communications interface useful for understanding the present disclosure;
FIG. 3 schematically illustrates a second static fieldbus communications interface useful for understanding the present disclosure;
FIG. 4 schematically illustrates a dynamically reconfigurable fieldbus communications interface according to the present disclosure; and
FIG. 5 illustrates encryption of programming streams according to the present disclosure.

### DETAILED DESCRIPTION

The present disclosure is based on the recognition that, with fast changing technical challenges, industrial automation systems require process control systems to be provided with flexible fieldbus connectivity to meet changing connectivity requirements and to remain up-to-date. The present disclosure therefore provides devices and methods to improve flexibility and performance of fieldbus connectivity services.

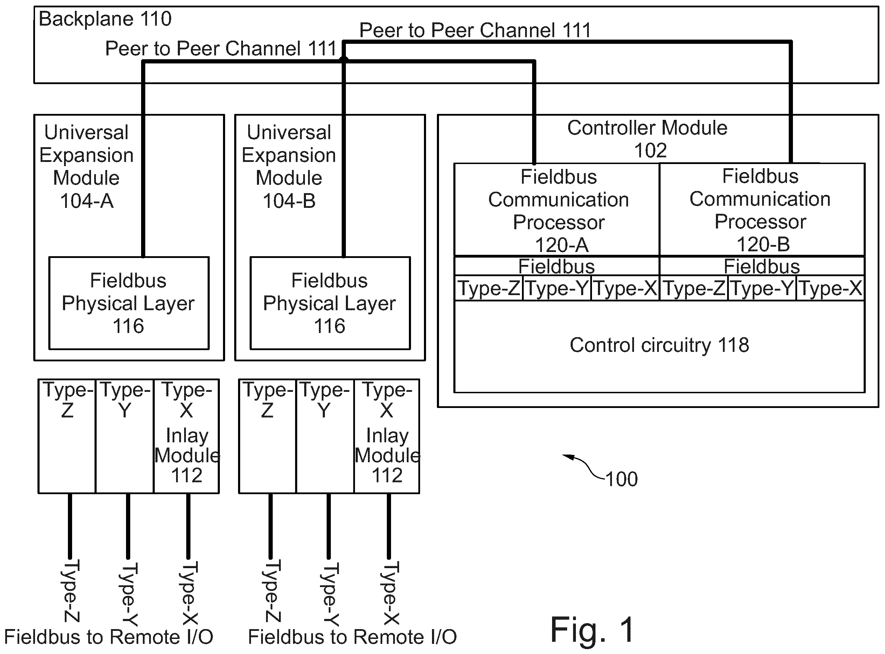

FIG. 1A illustrates a process control system 100 for controlling an industrial process carried out by an industrial automation system (not shown). The process control system 100 comprises a plurality of modules, including a controller module 102 and two universal expansion modules 104-A and 104-B (referred to collectively as expansion modules 104), physically and communicatively coupled to one another via a backplane 110. The process control system 100 may find application in any field of industry where process automation is desired, such as energy, oil and gas, chemical, petrochemical, and so on.

The controller module 102 is configured to execute at least one control application for controlling equipment of an automation system (not shown) to carry out a production process. The at least one control application may generate output commands for controlling plant equipment such as pumps, valves, conveyors, mixers, and heaters on the basis of input signals received from plant instrumentation and sensors. Any such equipment and instrumentation may form part of one or more field devices with which the controller module 102 communicates. The industrial automation system may comprise remote I/O (input/output) modules that deliver input signals from the field devices to the controller module 102 and which route output commands from the controller module 102 back to the field devices. The control application may comprise control logic instructing the controller module 102 how to respond to the input signals with appropriate output commands to maintain normal functioning of the process.

Each universal expansion module 104 is configured to couple the controller module 102 to a respective fieldbus network. Whereas the fieldbus network conforms to a particular fieldbus protocol type, the universal expansion module 104 is protocol-agnostic, or passive, in the sense that it comprises only a physical layer transceiver 116 configured to handle layer 1 communications conforming to one or more fieldbus protocols, while higher layers of the fieldbus protocols are handled by the controller module 102. Each universal expansion module 104 is coupled to the backplane 110 via a respective inlay 112, which comprises a physical interface or connector which conforms to a particular fieldbus protocol type, referred to in FIG. 1 for purposes of illustration only as "Type-X", "Type-Y", and "Type-Z". In practical implementations, the fieldbus protocol type may be PROFIBUS, PROFINET, MODBUS RTU, MODBUS TCP, IEC 61850, for example, although it will be understood that the present disclosure is not to be treated as so limiting. As shown in FIG. 1, the backplane 110 comprises peer-to-peer channels 111 communicatively coupling the controller module 102 to respective universal expansion modules 104 for exchanging e.g. LVDS signals between the modules. In particular, channels 111 are provided between the physical layer transceivers 116 of the universal expansion modules 104-A, 104-B and respective flexible fieldbus communications processors 120-A, 120-B of the controller module 102, referred to collectively as flexible fieldbus communications processors 120.

The controller module 102 comprises control circuitry 118 for controlling fieldbus communication processors 120-A and 120-B, with these components cooperating to form a fieldbus communications interface. Each fieldbus communications processor 120 is flexible, in the sense that it is configured to handle fieldbus communication according to various protocol types. The controller module 102 is further provided with a switch mechanism for selecting the type of fieldbus protocol to be handled by the flexible fieldbus communications processor 120 according to requirements. In this way, the process control system 100 supports flexibility in the provision of fieldbus connectivity, since only the inlay 112 need be replaced when the process control system 100 is to be reconfigured to connect with a network device such as remote I/O module conforming to a different protocol type, while the flexible fieldbus communications processor 120 need only be switched to the new protocol type. In some cases, the same inlay 112 can be used for more than one fieldbus protocol type. The controller module 102 continues to provide fieldbus connectivity according to the new fieldbus protocol type using the same ports which were used to provide fieldbus connectivity according to the previously required fieldbus protocol type.

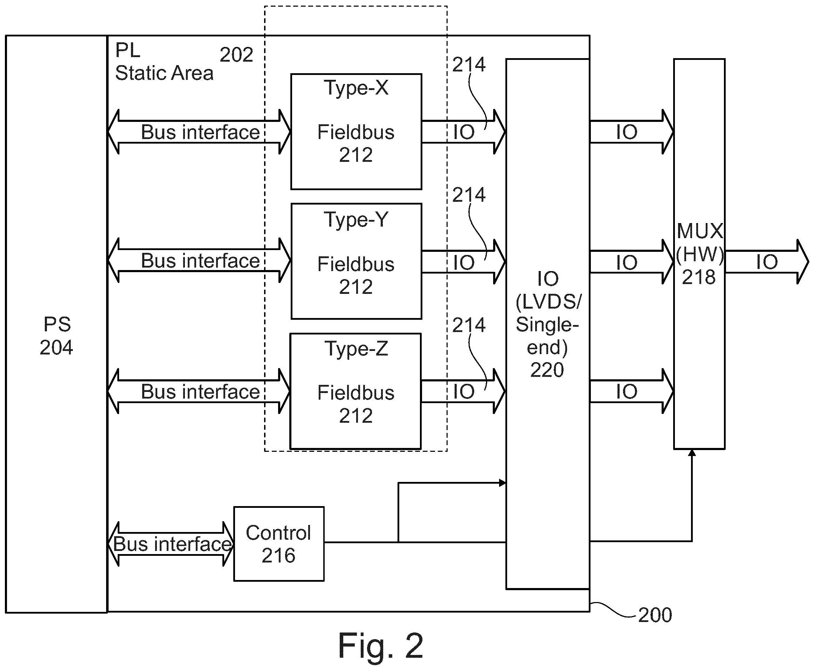

FIG. 2 illustrates one example of a flexible fieldbus communications interface 200, and its associated switch mechanism, which may be used to implement the fieldbus communications interface as shown in FIG. 1. In this example, the switch mechanism comprises a dedicated multiplexer.

The flexible fieldbus communications interface 200 in this example comprises programmable logic (PL) 202, e.g. a field-programmable gate array (FPGA), and a processor system (PS) 204. In one non-limiting example, the programmable logic 202 and processor system 204 form part of a system-on-chip (SoC), with communication between the programmable logic 202 and the processor system 204 taking place via an on-chip bus, using for example the Advanced eXtensible Interface (AXI) protocol.

Fieldbus instances 212 conforming to various protocol types are defined in a static area of the programmable logic 202. Each fieldbus instance 212 may comprise fieldbus protocol logic, for example register transfer level logic, which is used to configure the flexible fieldbus communications interface 200 according to the respective fieldbus protocol type (referred to here for purposes of illustration as Type X, Type Y, and Type Z). Each fieldbus instance 212 produces a set of signals 214 corresponding to the respective fieldbus protocol type.

The control circuitry 118 is implemented by the processor system 204 running control software in conjunction with control logic 216 programmed into the programmable logic 202, for example into the static area thereof.

Control circuitry 118 instructs the dedicated multiplexer (MUX) 218 to select one set of signals 214 according to requirements, for example to match the protocol used by a corresponding network device such as a remote I/O module. In this sense, the MUX 218 serves as a selection switch: no time slice multiplexing occurs. In this example, the multiplexer 218 is an external component implemented outside of the programmable logic 202. Thus, to reach the MUX 218 for selection, each set of signals 214 is passed through the I/O resources 220 of the programmable logic 202.

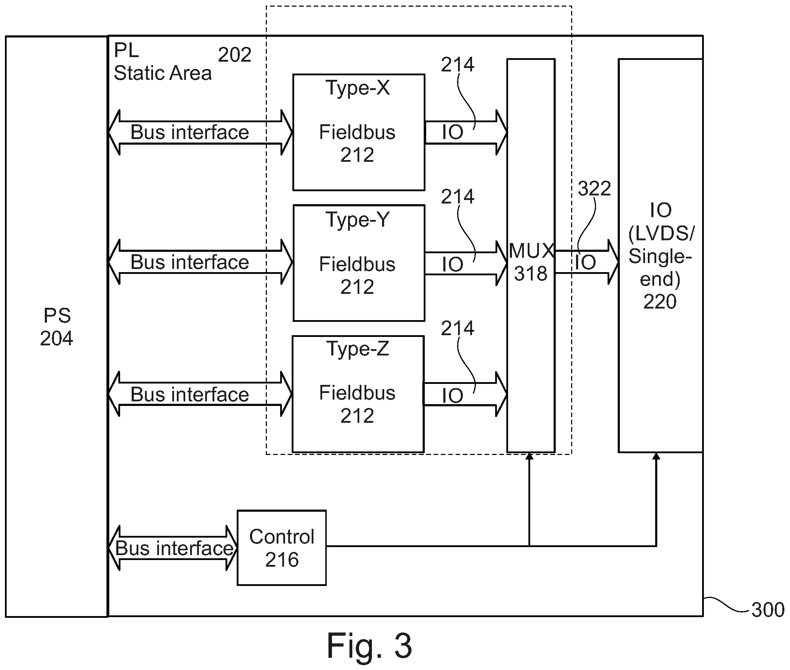

FIG. 3 illustrates another example of a flexible fieldbus communications interface 300 and its associated switch mechanism, which may be used to implement the fieldbus communications interface as shown in FIG. 1. In this example, the switch mechanism comprises a multiplexer 318 which is implemented using logic gates in the programmable logic 202.

In this example, the multiplexer 318 is instructed to select only one set of signals 214 output by the fieldbus instances 212 to be passed through the I/O resources 220 of the logic circuitry 202 as output signals 322, resulting in lower production and maintenance costs, at the expense of higher consumption of logic resources. The fieldbus instances 212 are once again defined in the static area of the programmable logic 202, together with the MUX 318.

Both the examples of FIGS. 2 and 3 lack the ability to dynamically exchange fieldbus instances implemented in the programmable logic 202 without affecting other functions.

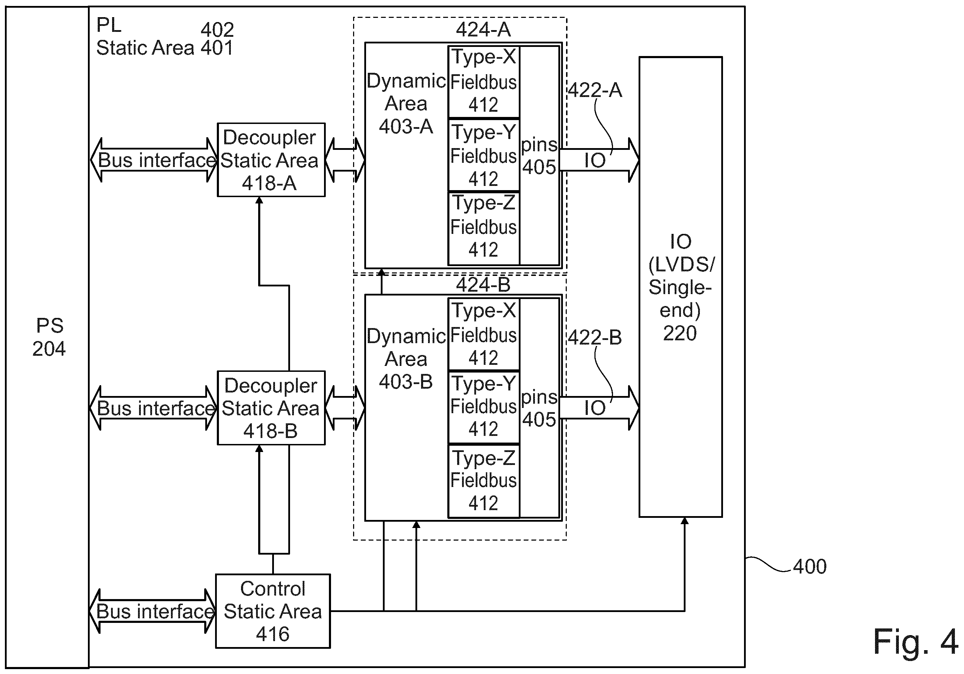

FIG. 4 schematically illustrates a dynamically reconfigurable fieldbus communications interface 400 according to the present disclosure, which may be used to implement the fieldbus communications interface as shown in FIG. 1.

In this example, the programmable logic 402 comprises a static area 401 as well as a plurality of dynamic areas 403, labelled in FIG. 4 as dynamic areas 403-A and 403-B. Each dynamic area 403 is programmable using one of a plurality of fieldbus stack hardware configurations 412, each conforming to a respective fieldbus protocol type (Type, X, Type Y, or Type Z), so as instantiate a selected fieldbus instance within the dynamic area 403. The fieldbus stack hardware configuration 412 may comprise a programming stream for programming one of the dynamic areas 403. The programming stream may define fieldbus protocol logic to be executed by the flexible fieldbus communications interface. The programming stream may comprise a bitstream, for example. In this way, dynamic reconfiguration functionality is provided within the PL-based platform, which manages the exchange of fieldbus instances. Each dynamic area 403 can be dynamically reconfigured to operate according to a selected fieldbus protocol type without affecting the static area or other dynamic areas. The size of each dynamic area 403 is selected at design time to accommodate the largest fieldbus instance. Pin switches 405 for the different protocol types can be implemented within each dynamic area 403 and/or in the static area 401 using logic gates. In an example, the I/O resources 220 of the programmable logic 202 comprise a configurable signal bridge/matrix which is used for selective routing of signals between dynamic areas 403 and external network devices, thereby enabling variation in the size of the dynamic areas 403. For example, at least one of the dynamic areas 403 may be sized to accommodate the largest fieldbus instance while at least one of the other dynamic areas 403 has a smaller size. The so-configured dynamic area 403 outputs only one set of signals 422, such that the need for the multiplexers in the above-described arrangements is obviated.

The decoupling logic 418 is activated whenever a partial reconfiguration of one dynamic area 403 is initiated, to avoid the reconfiguration impacting the static area 401.

Upon receiving a reconfiguration command, the control circuitry 118 carries out the following steps:-
a). Identifying the target fieldbus instance(s) to be exchanged based on the reconfiguration command;
b). Loading a new configuration corresponding to the desired fieldbus protocol type onto the specific dynamic area 403 in question;
c). Optionally verifying successful loading of the new configuration;
d). Establishing communication between the newly loaded fieldbus instance(s) and the corresponding field devices or subsystems.

In this way, the dynamic reconfiguration functionality enables the reconfiguration process to be coordinated in a manner that minimizes disruption to overall system operation.

The control circuitry 118 again comprises the processor system 204 running control software and/or the control logic 416 programmed into the programmable logic 402.

In an example, the above-recited steps a)-d) are carried out by the control software, while the control logic 416 functions to disable and enable function blocks and signals of the decouplers 418, I/O resources 220, and dynamic areas 403 during execution of the steps. By means of the disabling and enabling of function blocks, the impact-free exchange and startup of dynamic areas 403 is facilitated.

In another example, the reconfiguration is merely initiated by the control software, while steps a)-d) are carried out by the control logic 416.

In yet further examples, one or more of steps a)-d) may be software-executed and the others hardware-executed.

Moreover, in the case that more than one dynamic area 403 is available within the programmable logic 402, the dynamically reconfigurable fieldbus communications interface 400 is able to host multiple fieldbus instances, each corresponding to a specific protocol type, such as PROFIBUS. As shown in FIG. 4, the dynamically reconfigurable fieldbus communications interface 400 comprises a second dynamic area 403-B alongside the first dynamic area 403-A. In this way, the two dynamic areas 403-A and 403-B may be used to implement the separate interfaces 120-A and 120-B as shown in FIG. 1 for communicating with multiple universal expansion modules 104-A and 104-B simultaneously. The multiple dynamic areas 403-A and 403-B may host fieldbus instances conforming to the same protocol type or to different protocol types.

The dynamically reconfigurable fieldbus communications interface according to the present disclosure provides high flexibility by facilitating dynamic configuration with limited logic resources. Free switching between different fieldbus protocols is enabled without interrupting overall system operation or requiring manual intervention. Enhanced performance for process control system is thus permitted while driving down costs associated with production and maintenance.

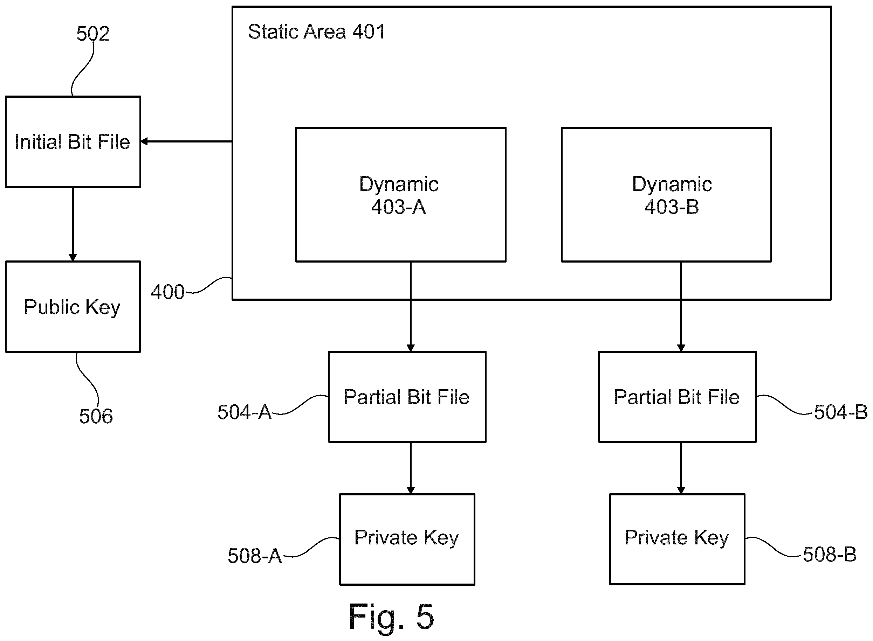

FIG. 5 illustrates encryption of programming streams according to the present disclosure. Each fieldbus stack hardware configuration 412 (taking the form, for example, of a configuration file or bitstream is encrypted using asymmetric cryptography. The static area 401 generates an initial bitstream file 502. Each dynamic area 403 (e.g., a reconfiguration module thereof) generates a partial bitstream file 504-A, 504-B. After the initial bitstream file 502 is loaded, the programmable logic 402 generates a public-private key pair. The public key 506 is sent to a host, which uses the public key 506 during a build process to encrypt the initial bitstream file 502 and the partial bitstream files 504-A, 504-B. The private keys 508-A, 508-B are stored in memory, for example in SRAM, so that the controller module 102 can decrypt the bitstreams.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A dynamically reconfigurable fieldbus communications interface comprising:
programmable logic which comprises a static area and at least one dynamic area; and
control circuitry configured to program the at least one dynamic area using one of a plurality of interchangeable fieldbus stack hardware configurations, each conforming to a respective fieldbus protocol type.

2. The dynamically reconfigurable fieldbus communications interface as claimed in claim 1, wherein the at least one dynamic area is dynamically reconfigurable to operate according to a selected fieldbus protocol type without affecting the static area or any other dynamic area.

3. The dynamically reconfigurable fieldbus communications interface as claimed in claim 1 or 2, wherein a size of the at least one dynamic area is determined to accommodate the largest of the interchangeable fieldbus stack hardware configurations.

4. The dynamically reconfigurable fieldbus communications interface as claimed in any preceding claim, comprising pin switches for the different fieldbus protocol types implemented within the at least one dynamic area.

5. The dynamically reconfigurable fieldbus communications interface as claimed in any preceding claim, wherein the or each dynamic area outputs only one set of fieldbus signals.

6. The dynamically reconfigurable fieldbus communications interface as claimed in preceding claim, wherein the control circuitry is configured to receive a reconfiguration command specifying a required fieldbus protocol type and, in response to receiving the reconfiguration command:
to identify a target fieldbus instance to be exchanged based on the reconfiguration command;
to load a replacement fieldbus stack hardware configuration corresponding to the required fieldbus protocol type onto a dynamic area currently occupied by the target fieldbus instance;
to verify that loading of the replacement fieldbus stack hardware configuration successfully created a replacement fieldbus instance;
to establish communication between the replacement fieldbus instance and at least one field device.

7. The dynamically reconfigurable fieldbus communications interface as claimed in any preceding claim, wherein the programmable logic comprises a plurality of dynamic areas including the at least one dynamic area, whereby the dynamically reconfigurable fieldbus communications interface is operable to host multiple fieldbus instances, each corresponding to a specific protocol type.

8. The dynamically reconfigurable fieldbus communications interface as claimed in claim 7, wherein the plurality of dynamic areas are operable to implement separate interfaces for communicating with respective field devices of a process control system.

9. The dynamically reconfigurable fieldbus communications interface as claimed in claim 7 or 8, wherein the plurality of dynamic areas host fieldbus instances conforming to the same fieldbus protocol type.

10. The dynamically reconfigurable fieldbus communications interface as claimed in claim 7 or 8, wherein the plurality of dynamic areas host fieldbus instances conforming to different fieldbus protocol types.

11. The dynamically reconfigurable fieldbus communications interface as claimed in any preceding claim, wherein the fieldbus stack hardware configuration that is used to program the at least one dynamic area is encrypted.

12. The dynamically reconfigurable fieldbus communications interface as claimed in claim 11, wherein the fieldbus stack hardware configuration is encrypted using asymmetric cryptography, wherein the programmable logic is configured to generate a public-private key pair, wherein the public key of the pair is usable to encrypt a partial bitstream file for the at least one dynamic area, and wherein a private key of the pair is stored in memory.

13. The dynamically reconfigurable fieldbus communications interface as claimed in any preceding claim, wherein the control circuitry comprises control logic programmed into the programmable logic and/or a processor system configured to run control software.

14. A method for dynamically reconfiguring a fieldbus communications interface which comprises programmable logic comprising a static area and at least one dynamic area, the method comprising:
programming the at least one dynamic area using one of a plurality of interchangeable fieldbus stack hardware configurations, each conforming to a respective fieldbus protocol type.

15. A computer-readable medium comprising instructions which, when executed by a computing system, cause the computing system to perform the method of claim 14.
